# EUROPEAN PATENT SPECIFICATION

(11) **EP 2 945 165 B1**
(45) Date of publication and mention of the grant of the patent: **30.08.2017**
(21) Application number: 15166173.3
(22) Date of filing: 04.05.2015
(51) Int. Cl.: G21C 7/12, G21D 3/00, G21C 17/10

(54) **ROD CONTROL AND INFORMATION SYSTEM AND TEST METHOD FOR ROD CONTROL AND INFORMATION SYSTEM**
STABREGELUNGS- UND -INFORMATIONSSYSTEM UND TESTVERFAHREN FÜR STABREGELUNGS- UND -INFORMATIONSSYSTEM
SYSTÈME DE COMMANDE ET D'INFORMATIONS DE TIGE ET PROCÉDÉ DE TEST POUR UN SYSTÈME DE COMMANDE ET D'INFORMATIONS DE TIGE

(30) Priority: 14.05.2014 JP 2014100665
(43) Date of publication of application: 18.11.2015
(73) Proprietor: Hitachi, Ltd., Tokyo 100-8280 (JP)
(72) Inventor: Kodama, Soichiro, Tokyo 100-8280 (JP); Akasaka, Satoru, Tokyo 100-8280 (JP); Nishimura, Satoru, Tokyo 100-8280 (JP)
(74) Representative: MERH-IP Matias Erny Reichl Hoffmann Patentanwälte PartG mbB

(56) References cited:
- JP-A- H11 237 490
- JP-A- 2003 177 195
- JP-A- 2008 002 865
- US-A1- 2014 016 732

## Description

### BACKGROUND OF THE INVENTION

The present invention relates to a rod control and information system and a control rod individual controller and a test system for the rod control and information system for performing and monitoring the insertion and extraction of control rods to and from a nuclear reactor in a nuclear power plant.

JP,A 11-237490 discloses techniques by which a device called an FMCRD device simulator is connected to the input/output part of each actuator and each sensor of a control rod on-site transmission device to simulate input/output signals downstream of a motor drive controller, thereby allowing control rod individual controllers to conduct more one-time tests than before and eliminating the need for connecting with an actual control rod motor drive controller and actual control rod position sensors.

In US 2014/016732 A1, an apparatus and a method for safely controlling a control rod of a nuclear reactor of a nuclear power plant is described. The apparatus may include a first controller to output a signal to insert or withdraw the control rod, a mechanical portion to perform insertion or withdrawal of the control rod in response to the signal output by the first controller and a brake to stop the control rod by force when the control rod is withdrawn irrespective of an intended control of the control rod.

In JP 2003-177195 A, a control rod operation controller has a control rod selection part for calculating a corresponding control rod address from a control rod selection information operated from a control panel. A drive command output part for generating a drive command signal from the calculated control rod address and an insert/pullout interlock part for generating an insert or pullout command signal by an input of an insert or pullout signal or an operating permission signal is provided.

In JP 2008-002865 A, a system for the registration of stopping positions of control rods in a control rod drive mechanism of an induction motor type are described.>

### SUMMARY OF THE INVENTION

The output of nuclear reactors in a nuclear power plant furnished with boiling water reactors such as advanced boiling water reactor (ABWR) or with pressurized water reactors is controlled by having multiple control rods inserted to and extracted from a fuel assembly inside each nuclear reactor. The control rods are driven vertically by having the rotational motion of motors converted to linear motion. The moving velocity and other parameters of the motor-driven control rods are controlled by control rod actuators which in turn are monitored and controlled by a rod control and information system.

The rod control and information system is generally made up of a control rod integrated controller, a control rod drive controller, control rod individual controllers, a motor drive controller, and a brake controller. The motor drive controller, including inverters and inverter controllers, is used to control the motors. The brake controller is used to control the operation of holding brakes.

When the rod control and information system as a whole or the control rod on-site transmission device as a stand-alone device is subjected to a functional verification test, it is necessary to verify whether input/output signals are normally transmitted between all controllers making up the rod control and information system. Because the input/output signals involved in this verification test include a control rod drive command regarding the positions of the control rods to be controlled and a control rod position signal corresponding to the control rod drive command, it is impossible to verify the integrity of the rod control and information system alone.

For that reason, to verify the integrity of the rod control and information system requires actually installing wires between the motor drive controller connected to the motors, control rod position sensors, and brake controller on the one hand and the control rod individual controllers on the other hand, and carrying out the test while driving the control rods.

The control rod individual controllers exchange control and monitoring signals with the individual control rods on a one-to-one basis. For example, if a nuclear reactor in a nuclear power plant has two hundreds and five control rods inside, there exist two hundreds and five control rod individual controllers. In such a case, in order to verify the transmission function of the rod control and information system and control rod on-site transmission device, it is necessary to wire the motors, motor drive controller, control rod position sensors, and brake controller connected to the control rod individual controllers. Installation of all these wires for the functional verification test has been a huge burden on inspection personnel in terms of time and effort and has limited the environment in which the test can be done.

The techniques disclosed in the above-cited patent application require installing test facilities for inputting and outputting simulated signals to and from the control rod motor drive controller and control rod position sensors, and setting up wiring between the test facilities and the control rod individual controllers when the test facilities are used. The use of the test facilities contributes to improving the efficiency of the test by saving space at the time of test and reducing the frequency with which wiring work needs to be done. However, the problem remains that the effort expended by inspection personnel at wiring work and the cost of manufacturing the test facilities are not negligible.

The present invention has been made in view of the above circumstances and provides a rod control and information system including control rod individual controllers for performing and monitoring the insertion and extraction of control rods to and from a nuclear reactor in a nuclear power plant according to claim 1, and a test method for a rod control and information system according to claim 2. To solve the foregoing problems, the invention according to the independent claims is proposed. Further preferred developments are described by dependent claims.

The present invention makes it possible to efficiently conduct the functional verification test of the rod control and information system as a whole and of the control rod on-site transmission devices as a stand-alone device each.

### BRIEF DESCRIPTION OF THE DRAWINGS

FIG. 1 is a block diagram showing an overall configuration of a rod control and information system and related devices embodying the present invention;
FIG. 2 is a block diagram of a control rod on-site transmission device according to the embodiment;
FIG. 3 is another block diagram of the control rod on-site transmission device according to the embodiment;
FIG. 4 is a flowchart of a test method for the rod control and information system embodying the present invention; and
FIG. 5 is a flowchart of another test method for the rod control and information system embodying the invention.

### DESCRIPTION OF THE PREFERRED EMBODIMENTS

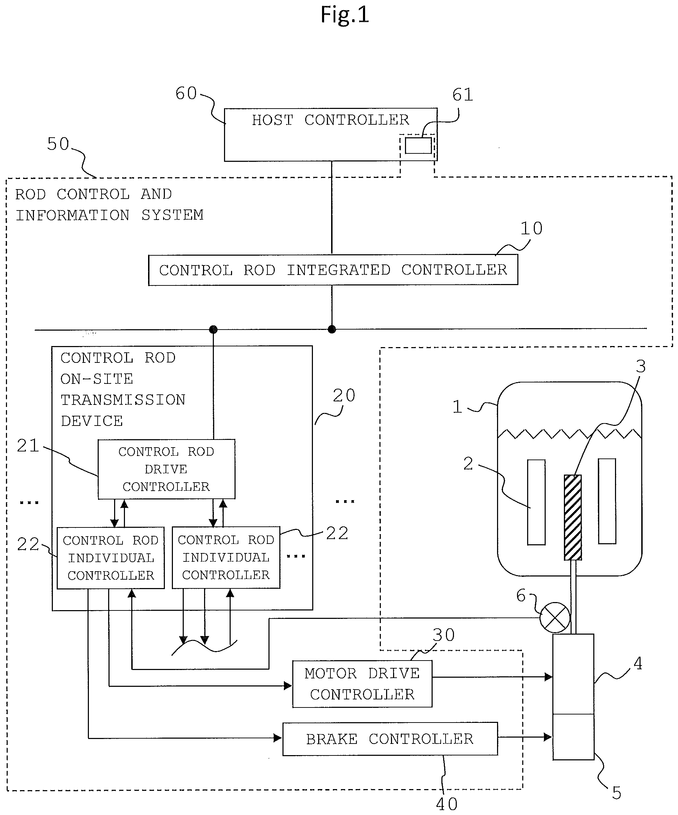

A rod control and information system, control rod individual controllers, and a test method for the rod control and information system embodying the present invention will now be described with reference to FIGS. 1 through 5. The ensuing explanations made with reference to FIGS. 1 through 5 apply to the case of a boiling water reactor in a nuclear power plant.

### Typical configuration of the rod control and information system

FIG. 1 is a block diagram showing an internal structure of a rod control and information system 50 and an object to be controlled by the system 50.

In FIG. 1, fuel assemblies 2 and control rods 3 are shown installed in a nuclear reactor 1.

The control rods 3 are adjusted in position by control rod actuators to control the nuclear fission reaction of the fuel assemblies 2 so that the nuclear reactor 1 provides optimum output.

The control rod actuators are each made up of a motor 4, a control rod position sensor 6 for detecting the position of the control rod 3, and a brake 5 offering the function of holding the control rod at a predetermined position when the control rod is not actuated. The control rod actuator converts the rotational motion of the motor 4 into linear motion to insert or extract the control rod 3 and causes the brake 5 to hold the position of the control rod 3.

The motor 4 in the control rod actuator is an electrical drive source that may adopt a step motor or an induction motor, for example. If a step motor is adopted as the motor 4, the step motor is coupled to a ball screw engaged with a ball nut that in turn is equipped with a coupling rod extending axially. When the step motor rotates forward or in reverse, the control rod 3 can be moved toward the reactor core (insertion drive) or away therefrom (extraction drive).

The brake 5 is mounted on the shaft of the motor 4 in the control rod actuator.

The control rod position sensor 6 is attached to the shaft of the motor 4. Being positioned such, the control rod position sensor 6 detects an angular change of the shaft, and outputs a position signal reflecting the up-down change in the position of the control rod 3 to the control rod individual controller 22 in the rod control and information system 50.

The rod control and information system 50 is provided as a system that controls and monitors the insertion and extraction of these control rods 3 to and from the nuclear reactor. The rod control and information system 50 is made up of a control rod integrated controller 10, control rod on-site transmission devices 20 each including a control rod drive controller 21 and control rod individual controllers 22, a motor drive controller 30, and a brake controller 40.

The control rod integrated controller 10 is duplexed into controllers A and B. The control rod integrated controller 10 plays a role of transmitting a control rod drive command from a host controller 60 to the appropriate one of the multiple control rod on-site transmission devices 20.

The control rod drive command is a command that is output from the host controller 60 and includes multiple items of information about control rod drive. For example, the items of information include information about the control rod coordinates specifying the control rod selected from among the numerous control rods in the nuclear reactor, information about selecting the operation mode in which to drive the selected control rod, and information about selecting the direction in which to drive the control rod for insertion or extraction.

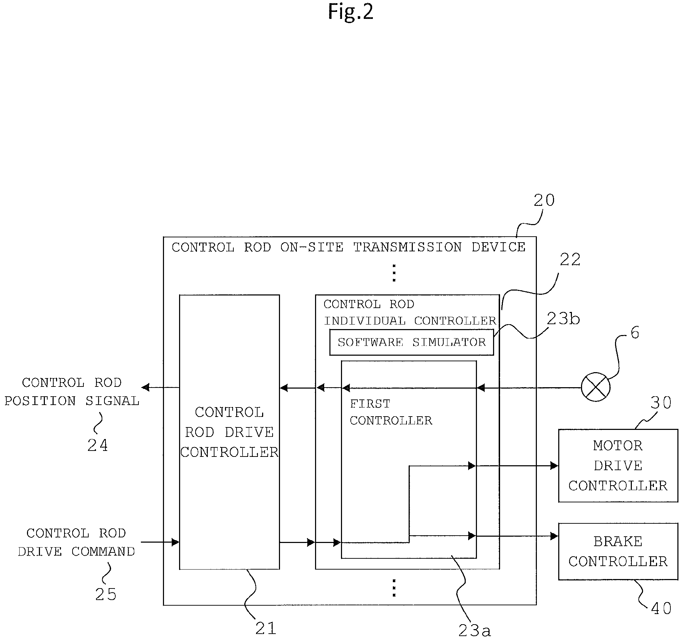

The control rod on-site transmission devices 20 are explained next with reference to FIG. 2. FIG. 2 shows a structure of the control rod on-site transmission device 20 according to the embodiment.

The control rod on-site transmission devices 20 each include a duplexed control rod drive controller 21, and multiple control rod individual controllers 22 each duplexed and installed for each of the control rods 3. Given the input of a control rod drive command regarding control rod drive from the control rod integrated controller 10, the control rod on-site transmission device 20 forwards the command to the control rod drive controller 21 inside.

The control rod drive controller 21 plays a role of transmitting the control rod drive command input from the control rod integrated controller 10 to an appropriate one of the multiple control rod individual controllers 22.

The control rod individual controllers 22 each include a first controller 23a and a software simulator (second controller) 23b. In accordance with the control rod drive command input from the control rod drive controller 21, the first controller 23a in the control rod individual controller 22 transmits a motor drive command to the motor drive controller 30 and a brake deactivation command to the brake controller 40 to let the motor 4 be driven. Without the drive command, the brake deactivation command is not transmitted to the brake controller 40. In this case, the shaft of the motor 4 is secured by the brake 5 to hold the position of the control rod 3.

The control rod individual controller 22 causes the first controller 23a not only to transmit the control rod drive command but also to exchange signals regarding the position of the control rod 3. The position of the control rod 3 is measured by the control rod individual controller 22 on the basis of output from the control rod position sensor 6 mounted on the shaft of the motor 4. The control rod individual controller 22 transmits the information about the control rod position coming from the control rod position sensor 6 to the control rod drive controller 21 and control rod integrated controller 10. This ultimately allows an operator in the main control room to observe the control rod position information through a display device (not shown) of the host controller 60.

Furthermore, the control rod individual controller 22 detects abnormalities in drive status of the control rod 3. For example, the abnormalities of control rod operation include "drift" and "stick." "Drift" is a state in which the control rod position is changed without the control rod drive command being issued. "Stick" is a state in which the control rod position is not changed despite the control rod drive command being issued. If any of these abnormalities occur, the control rod individual controller 22 transmits an error signal reflecting the abnormality to the control rod integrated controller 10 via the control rod drive controller 21 in order to stop driving the control rod 3.

The software simulator 23b will be discussed later.

The motor drive controller 30 is made up of an inverter and an inverter controller. The motor drive controller 30 drives the motor 4 on the basis of the control rod drive command output from the control rod individual controller 22 in the control rod on-site transmission device 20.

The brake controller 40 supplies the brake 5 with a voltage for activating and deactivating the brake 5 on the basis of a brake control signal output from the control rod individual controller 22 in the control rod on-site transmission device 20.

The procedure for operating the control rod 3 where a step motor is adopted as the motor 4 is explained below briefly with reference to FIG. 2.

The control rod 3 is operated by the control rod drive command output by way of the control rod integrated controller 10. The control rod drive command is input to the control rod individual controller 22 via the control rod drive controller 21. On the basis of the input control rod drive command, the control rod individual controller 22 outputs the control rod drive command to the motor drive controller 30 and a brake control command to the brake controller 40. Receiving the brake control command from the control rod individual controller 22, the brake controller 40 deactivates the brake 5 to allow the control rod 3 to be driven. The motor drive controller 30 rotates the step motor 4 on the basis of a pulse signal read from the drive command received from the control rod individual controller 22. Simultaneously, the control rod individual controller 22 detects the current position of the control rod 3 by use of a voltage (position signal) input from the control rod position sensor 6. When the control rod 3 comes up just short of the target position, the control rod individual controller 22 causes the motor derive controller 30 to output a pulse signal of a lower frequency to lower the rotational speed of the step motor 4, thereby reducing the drive speed of the control rod. After the step motor 4 is stopped, the brake 5 is activated.

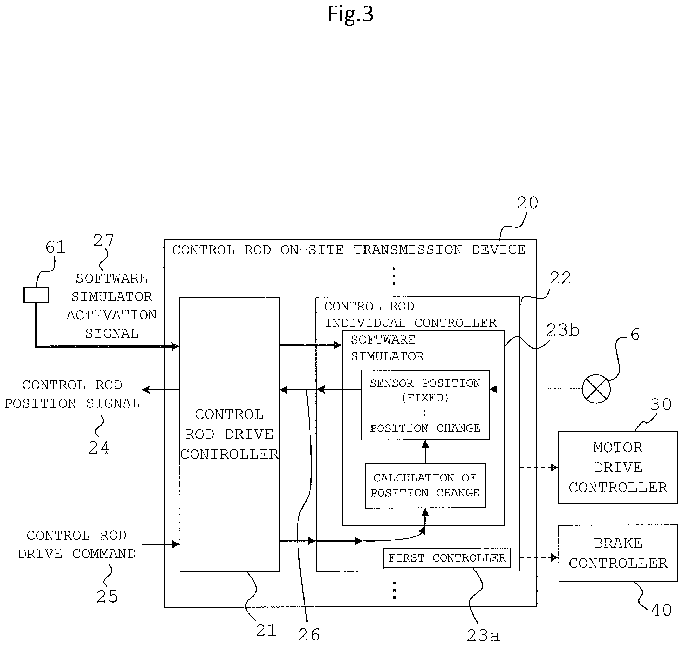

A specific structure of this embodiment will now be explained with reference to FIG. 3. FIG. 3 shows a structure of the control rod on-site transmission device 20 according to the embodiment.

In FIG. 3, the control rod individual controller 22 mounted in the control rod on-site transmission device 40 is shown incorporating the software simulator 23b in addition to the first controller 23a that enables the motor 4 to be driven and exchanges signals with regard to the position of the control rod 3 as mentioned above.

The software simulator 23b is activated by a software simulator activation signal 27 input to the control rod on-site transmission device 20. Once the software simulator 23b is activated, the motor drive command is not transmitted to the motor drive controller 30 nor is the brake deactivation command transmitted to the brake controller 40 even if the control rod drive command is input. In addition, diagnostic/error status regarding a control rod position signal 24 input from the control rod position sensor 6 is entirely overwritten with normal status. That is, whereas the control rod drive command is being input, the state in which the control rod position remains unchanged is not detected as "stick."

Furthermore, given the control rod drive command input to the control rod individual controller 22, the software simulator 23b calculates a predictable change in the control rod position. The software simulator 23b adds the result of the calculation of the control rod position change to the control rod position information (fixed value) actually input from the control rod position sensor 6, and outputs the result of the addition to the control rod drive controller 21 as a simulated control rod position signal 26. The simulated control rod position signal 26 is converted by the control rod drive controller 21 into a control rod position signal 24 that is transmitted to the control rod integrated controller 10. The operator in the main control room verifies the signal through the display device of the host controller 60.

That is, where the control rod individual controller 22 incorporates the software simulator 23b, it is possible to obtain the control rod position signal 24 corresponding to the control rod drive command 25 without connecting the control rod individual controller 22 to the motor drive controller 30 (motor 4) or to the brake controller 40 (brake 5).

Furthermore, a command device 61 serving as the rod control and information system 50 is provided in the host controller 60, the command device 61 outputting to the control rod individual controller 22 the software simulator activation signal 27 for activating the software simulator 23b. That is, the presence or absence of the software simulator activation signal 27 from the command device 61 offers switching between the first controller 23a and the software simulator 23b.

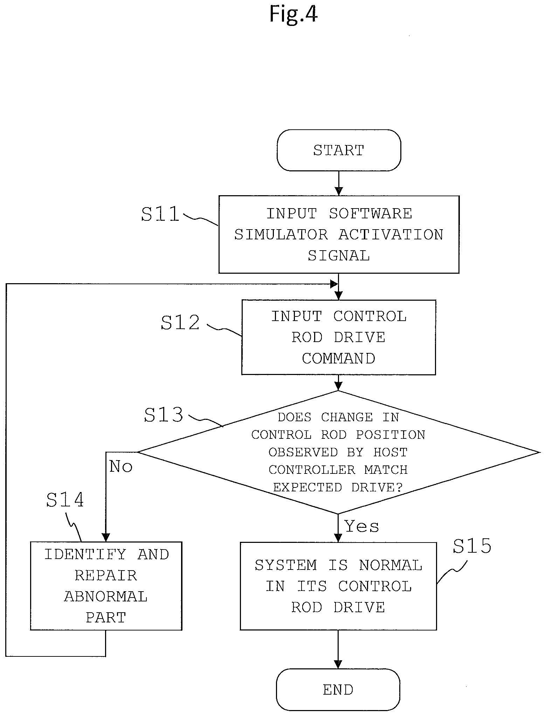

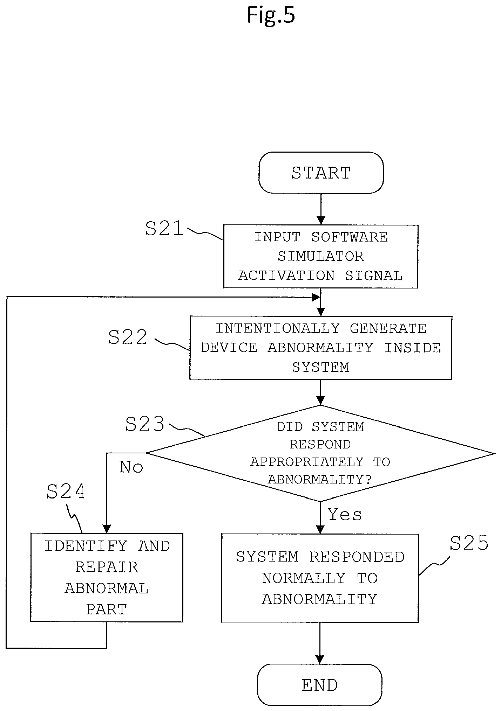

Next, the test method for the rod control and information system 50 embodying the present invention is explained below with reference to FIGS. 4 and 5. The substance of the test is divided roughly into two categories: verification of the integrity of the response to the input of a drive command signal; and verification of the integrity of the response to abnormalities occurring during system operation.

The test method of verifying the integrity of the response to the input drive command signal is first explained with reference to FIG. 4. FIG. 4 is a flowchart of an integrity verification test conducted by the rod control and information system 50 with regard to the drive command.

First, the command device 61 of the host controller 60 is operated to output the software simulator activation signal 27. The software simulator activation signal 27 is input to the control rod individual controller 22 via the control rod integrated controller 10 and the control rod drive controller 21 in the control rod on-site transmission device 20 (step S11). The signal thereafter activates the software simulators 23b in the control rod individual controllers 22 included in all control rod on-site transmission devices 20 connected.

Next, the operator in the main control room inputs the control rod drive command by use of the host controller 60 (step S12). In turn, the control rod drive command is input to the corresponding control rod individual controller 22. In the control rod individual controller 22, the software simulator 23b calculates a predictable change in the control rod position and adds the result of the calculation to the control rod position information (fixed value) input from the control rod position sensor 6. A simulated control rod position signal 26 resulting from the addition is converted to the control rod position signal 24 that is subsequently input to the host controller 60.

The operator in the main control room then determines whether the input control rod position signal displayed on the display device of the host controller 60 coincides with the expected value of the control rod position (step S13). In case of a mismatch, the abnormal part is identified and repaired (step S14). The control is then returned to step S12. In the event of a match, the operator determines that the system functions normally in terms of control rod drive (step S15), and terminates the process. In this manner, the integrity of the rod control and information system 50 can be verified.

Diverse variations are conceivable as to the substance of the integrity verification test.

For example, with the software simulator 23b activated, the host controller 60 may input the same drive command to all control rod individual controllers 22 to determine whether all control rod position signals verified by the host controller 60 coincide with the expected control rod position signal, or whether position signal deviations that may occur fall within a predetermined range (e.g., within a predetermined range of the deviations). This determination makes it possible to verify individual differences between the control rod individual controllers 22 or between the control rod drive controllers 21.

According to this method, if a given control rod individual controller 22 has developed an abnormality, the host controller 60 should find out that the position signal about one control rod is different from other signals. This enables the host controller 60 to identify the abnormal part in the control rod individual controller 22. In addition, if the control rod drive controller 21 has developed an abnormality, the control rod position signals 24 from all control rod individual controllers 22 connected downstream of the faulty control rod drive controller 21 should be different from an expected control rod position signal. This different result makes it possible to identify the abnormal part in the control rod drive controller 21.

Moreover, this embodiment enables confirmation of the integrity of the response by the rod control and information system 50 to a given state of abnormality. This is because the software simulators 23b in the control rod individual controllers 22 substitute for normal status all errors stemming from the absence of actual operations of the motor 4 and brake 5 while at the same time simulating the control rod position signals 24, so that the rod control and information system 50 can be regarded as a normal system.

Explained below with reference to FIG. 5 is the test method of verifying the integrity of the response to an abnormality during system operation. FIG. 5 is a flowchart of an integrity verification test conducted by the rod control and information system 50 in response to an abnormality.

First, the command device 61 of the host controller 60 is operated to output the software simulator activation signal 27. The software simulator activation signal 27 is input to the control rod individual controller 22 via the control rod integrated controller 10 and the control rod drive controller 21 in the control rod on-site transmission device 20 (step S21). The signal thereafter activates the software simulators 23b in the control rod individual controllers 22 included in all control rod on-site transmission devices 20 connected.

Then, power to one control rod on-site transmission device 20 is cut off (step S22). The operator in the main control room determines whether an error signal sent to the host controller 60, i.e., the response by the system to the abnormality, is appropriate (e.g., whether an error signal stemming from power interruption is appropriately input to the host controller 60 via the control rod integrated controller 10)(step S23). If it is determined that the error signal is not appropriate, an abnormal part is identified and repaired (step S24). The control is then returned to step S22. By contrast, if it is determined that the error signal is appropriate, the response to the abnormality during system operation is determined to be suitable (step S25), and the process is terminated. In this manner, the integrity of the rod control and information system in case of an abnormality can be verified.

In the above-described embodiment, the control rod on-site transmission device 20 of the rod control and information system 50 is made up of the control rod drive controller 21 and the multiple control rod individual controllers 22. Each of the control rod individual controllers 22 incorporates beforehand the software simulator 23b that calculates the position change of the control rod 3 in response to the control rod drive command input to the control rod individual controller 22 via the control rod drive controller 21. At the time of the test, the software simulator activation signal 27 is issued to activate the software simulator 23b which in turn obtains the simulated control rod position signal 26 through calculation and outputs the calculated signal as the control rod position signal 24 so as to determine the integrity of the control rod on-site transmission device 20 and that of the rod control and information system 50.

In this manner, the control rod position signal 24 can be output in response to the control rod drive command inside the control rod on-site transmission device 20. As a result, the rod control and information system 50 can verify, on a stand-alone basis, the functionality of the entire system without being connected to the motor 4 or brake 5. This allows the control rod on-site transmission device 20 to verify its functionality on a stand-alone basis. Furthermore, the integrity of the rod control and information system 50 as a whole can be verified without hundreds of pairs of motors 4 and brakes 5 being wired, which can lead to significant streamlining of the work of testing.

Because the software simulator 23b is incorporated in each control rod individual controller 22, it is possible to calculate the simulated control rod position signal 26 by the controller closest to the control rod 3. The integrity of the devices interposed between the host controller 60 and the control rod individual controllers 22 can be verified under normal control and evaluated. For these reasons, the integrity verification test can be conducted efficiently.

It should be understood that the present invention when embodied is not limited to the above-described embodiments and that various modifications, variations and alternatives may be made in the invention so far as they are within the scope of the appended claims or the equivalents thereof. Whereas the embodiments above offer detailed and specific explanations of the structures making up the devices and the system according to the invention, the invention is not limited to any one embodiment that may include all the explained structures.

For example, although it was explained that the command device 61 outputting the software simulator activation signal 27 is installed in the host controller 60 in the main control room, this is not limitative of the location where the command device may be installed. Alternatively, a portable switch box may be connected directly to the control rod on-site transmission device 20, and the switch box may be operated to output the software simulator activation signal to the control rod individual controllers 22.

Further, although it was explained above how the software simulator 23b is incorporated in each control rod individual controller 22, this is not limitative of the present invention. Alternatively, the software simulator 23b may be implemented in the form of a program that performs the following three procedures: (1) to prevent the motor drive command and the brake deactivation command from being transmitted to the motor drive controller 30 and to the brake controller 40, respectively; (2) to substitute for normal status all diagnostic/error status regarding the control rod position signals 24 input from the control rod position sensors 6; and (3) to calculate the predictable change in the control rod position in response to the control rod drive command input to the control rod individual controller 22, add the result of the calculation to the control rod position information (fixed value) input from the actual control rod position sensor 6, and output the result of the addition as the simulated control rod position signal 26. This program may be loaded into the existing control rod individual controller 22 and executed at the time of the test. The resulting benefits are the same as with the above-described embodiments.

Furthermore, it has been explained that the software simulator 23b adds the calculated value of the predictable change in the control rod position to the control rod position information (fixed value) input from the actual control rod position sensor 6 so as to obtain the simulated control rod position signal 26. Alternatively, there may be stored beforehand a table that lists the simulated control rod position signals in relation to the details of the control rod drive signal, and the simulated control rod position signal corresponding to the input control rod drive signal may be retrieved from the table and be output.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

## Claims

1. A rod control and information system (50) for controlling insertion and extraction of a plurality of control rods (3) to and from a nuclear reactor (1) in a nuclear power plant, the system comprising:
a control rod position sensor (6), a control rod integrated controller (10);
control rod on-site transmission devices (20) each including a control rod drive controller (21) and as many control rod individual controllers (22) as the number of the control rods (3);
a motor drive controller (30); and
a brake controller (40),
wherein each control rod individual controller (22) is configured to control insertion and extraction of a plurality of control rods (3) to and from a nuclear reactor (1) in accordance with a control rod drive command, the control rod individual controller (22) further comprises:
a first controller (23a) configured to transmit a motor drive command to a motor drive controller (30) in the rod control and information system (50) and a brake deactivation command to a brake controller (40) in the rod control and information system (50) in accordance with the control rod drive command transmitted, the first controller (23a) is further configured to output a control rod position signal input from the control rod position sensor (6); and
a second controller (23b) configured to obtain positions of the control rods (3) through calculation in accordance with the control rod drive command transmitted, the second controller (23b) is further configured to output the obtained control rod position as a control rod position signal,
wherein the second controller (23b) is configured to calculate a change of the control rod position, and
configured to calculate the control rod position on the basis of the control rod position information actually input from the control rod position sensor (6) and the calculated change of the control rod position.

2. A test method for a rod control and information system (50) according to claim 1, the test method comprising:
a first step of causing the control rod individual controllers (22) each to obtain positions of control rods (3) through calculation in accordance with the control rod drive command transmitted;
a second step of obtaining a control rod position signal from the control rod position obtained in the first step; and
a third step of determining whether the rod control and information system (50) is functioning normally by comparing the control rod position signal obtained in the second step to an expected value.

3. The test method according to claim 2;
wherein the first step includes inputting the same control rod drive command signal to all the control rods (3); and
wherein the third step includes determining whether the rod control and information system (50) is functioning normally by checking if a variation between the control rod position signals for each of the individual control rods (3) falls within a predetermined range, the control rod position signals being obtained by the control rod individual controllers (22).

4. The test method according to claim 2 or 3;
wherein the third step includes outputting the control rod position signals obtained by the control rod individual controllers (22) so that a result of a comparison between the control rod position signal for each of the control rods (3) and the expected value is displayed on a display device in the main control room.

5. The test method according to at least one of claims 2 to 4;
wherein the first step includes outputting the control rod drive command from the main control room; and
wherein the third step includes determining whether the rod control and information system (50) is functioning normally by checking if the control rod position signal output from each of the control rod individual controllers (22) coincides with the expected value.

6. The test method according to at least one of claims 2 to 5;
wherein the third step includes causing intentionally an abnormality in any one of the devices making up the rod control and information system (50) and determining whether the rod control and information system (50) is functioning normally by checking if the rod control and information system (50) responds appropriately to the abnormality.

7. The rod control and information system (50) according to claim 1, further comprising a command device (61) configured to provide an instruction to switch between the first controller (23a) and the second controller (23b) in each of the control rod individual controllers (22).

## Patentansprüche

1. Brennstabsteuerungs- und -informationssystem (50) zum Steuern des Einsetzens und des Extrahierens von mehreren Steuerstäben (3) in einen bzw. aus einem Kernreaktor (1) eines Kernkraftwerks, wobei das System Folgendes umfasst:
einen Steuerstabpositionssensor (6),
eine in den Steuerstab integrierte Steuereinrichtung (10);
Vor-Ort-Steuerstabübertragungsvorrichtungen (20), die jeweils eine Steuerstabantriebssteuereinrichtung (21) und einzelne Steuerstabsteuereinrichtungen (22) in einer Anzahl, die gleich der Anzahl der Steuerstäbe (3) ist, enthält;
eine Motorantriebssteuereinrichtung (30); und
eine Bremssteuereinrichtung (40), wobei jede einzelne Steuerstabsteuereinrichtung (22) konfiguriert ist, das Einsetzen und das Extrahieren von mehreren Steuerstäben (3) in bzw. aus einem Kernreaktor (1) in Übereinstimmung mit einem Steuerstabantriebsbefehl zu steuern, wobei die einzelne Steuerstabsteuereinrichtung (22) ferner Folgendes umfasst:
eine erste Steuereinrichtung (23a), die konfiguriert ist, in Übereinstimmung mit dem übertragenen Steuerstabantriebsbefehl einen Motorantriebsbefehl zu einer Motorantriebssteuereinrichtung (30) in dem Brennstabsteuerungs- und - informationssystem (50) zu übertragen und einen Bremsendeaktivierungsbefehl zu einer Bremsensteuereinrichtung (40) in dem Brennstabsteuerungs- und -informationssystem (50) zu übertragen, wobei die erste Steuereinrichtung (23a) ferner konfiguriert ist, eine Steuerstabpositionssignaleingabe von dem Steuerstabpositionssensor (6) auszugeben; und
eine zweite Steuereinrichtung (23b), die konfiguriert ist, durch Berechnung in Übereinstimmung mit dem übertragenen Steuerstabantriebsbefehl Positionen der Steuerstäbe (3) zu erhalten,
wobei die zweite Steuereinrichtung (23b) ferner konfiguriert ist, die erhaltene Steuerstabposition als ein Steuerstabpositionssignal auszugeben,
wobei die zweite Steuereinrichtung (23b) konfiguriert ist,
eine Änderung der Steuerstabposition zu berechnen, und
eine Steuerstabposition auf der Grundlage der Steuerstabpositionsinformationen, die tatsächlich von dem Steuerstabpositionssensor (6) eingegeben worden sind, und der berechneten Änderung der Steuerstabposition zu berechnen.

2. Testverfahren für ein Brennstabsteuerungs- und -informationssystem (50) nach Anspruch 1, wobei das Testverfahren Folgendes umfasst:
einen ersten Schritt des Veranlassens der einzelnen Steuerstabsteuereinrichtungen (22) jeweils durch Berechnung in Übereinstimmung mit dem übertragenen Steuerstabantriebsbefehl Positionen der Steuerstäbe (3) zu erhalten;
einen zweiten Schritt des Erhaltens eines Steuerstabpositionssignals von der Steuerstabposition, die in dem ersten Schritt erhalten worden ist; und
einen dritten Schritt des Bestimmens, ob das Brennstabsteuerungs- und - informationssystem (50) normal arbeitet, durch Vergleichen des Steuerstabpositionssignals, das in dem zweiten Schritt erhalten worden ist, mit einem erwarteten Wert.

3. Testverfahren nach Anspruch 2;
wobei der erste Schritt das Eingeben desselben Steuerstabantriebsbefehlssignals in alle Steuerstäbe (3) enthält; und
wobei der dritte Schritt das Bestimmen enthält, ob das Brennstabsteuerungs- und -informationssystem (50) normal arbeitet, durch Überprüfen, ob eine Schwankung zwischen den Steuerstabpositionssignalen für jeden der einzelnen Steuerstäbe (3) in einen vorgegebenen Bereich fällt, wobei die Steuerstabpositionssignale von den einzelnen Steuerstabsteuereinrichtungen (22) erhalten werden.

4. Testverfahren nach Anspruch 2 oder 3;
wobei der dritte Schritt das Ausgeben der Steuerstabpositionssignale, die von den einzelnen Steuerstabsteuereinrichtungen (22) erhalten worden sind, enthält, so dass ein Ergebnis eines Vergleichs zwischen dem Steuerstabpositionssignal für jeden der Steuerstäbe (3) und dem erwarteten Wert auf einer Anzeigevorrichtung in dem Hauptsteuerraum angezeigt wird.

5. Testverfahren nach mindestens einem der Ansprüche 2 bis 4;
wobei der erste Schritt das Ausgeben des Steuerstabantriebsbefehls von dem Hauptsteuerraum enthält; und
wobei der dritte Schritt das Bestimmen, ob das Brennstabsteuerungs- und - informationssystem (50) normal arbeitet, durch Überprüfen, ob das Steuerstabpositionssignal, das von jeder der einzelnen Steuerstabsteuereinrichtungen (22) ausgegeben worden ist, mit dem erwarteten Wert übereinstimmt, umfasst.

6. Testverfahren nach mindestens einem der Ansprüche 2 bis 5:
wobei der dritte Schritt das absichtliche Veranlassen einer Anomalie in einer der Vorrichtungen, die das Brennstabsteuerungs- und -informationssystem (50) bilden, und das Bestimmen, ob das Brennstabsteuerungs- und -informationssystem (50) normal arbeitet, durch Überprüfen, ob das Brennstabsteuerungs- und -informationssystem (50) angemessen auf die Anomalie reagiert, umfasst.

7. Brennstabsteuerungs- und -informationssystem (50) nach Anspruch 1, das ferner eine Befehlsvorrichtung (61) umfasst, die konfiguriert ist, eine Anweisung bereitzustellen, um in jeder der einzelnen Steuerstabsteuereinrichtungen (22) zwischen der ersten Steuereinrichtung (23a) und der zweiten Steuereinrichtung (23b) zu schalten.

## Revendications

1. Système de commande et d'information de barre de contrôle (50) pour commander l'insertion et l'extraction d'une pluralité de barres de contrôle (3) vers un réacteur nucléaire (1) et depuis celui-ci dans une centrale nucléaire, le système comprenant :
un capteur de position (6) de barre de contrôle,
un contrôleur (10) intégré à la barre de contrôle ;
des dispositifs de transmission sur site (20) pour barres de contrôle qui incluent chacun un contrôleur d'entraînement de barre de contrôle (21) et autant de contrôleurs individuels de barres de contrôle (22) que le nombre des barres de contrôle (3) ;
un contrôleur de pilotage moteur (30) ; et
un contrôleur de frein (40),
dans lequel chaque contrôleur individuel de barre de contrôle (22) est configuré pour commander l'insertion et l'extraction d'une pluralité de barres de contrôle (3) vers un réacteur nucléaire (1) et depuis celui-ci en accord avec un ordre d'entraînement de barre de contrôle, le contrôleur individuel de barre de contrôle (22) comprenant en outre :
un premier contrôleur (23a) configuré pour transmettre un ordre de pilotage moteur à un contrôleur de pilotage moteur (30) dans le système de commande et d'information (50) pour barre de contrôle et un ordre de désactivation de frein vers un contrôleur de frein (40) dans le système de commande et d'information (50) pour barre de contrôle, en accord avec l'ordre de pilotage de barre de contrôle transmis, le premier contrôleur (23a) étant en outre configuré pour délivrer un signal de position de barre de contrôle injecté depuis le capteur de position de barre de contrôle (6) ; et
un second contrôleur (23b) configuré pour obtenir des positions des barres de contrôle (3) par un calcul en accord avec l'ordre de pilotage de barre de contrôle transmis, le second contrôleur (23b) étant en outre configuré pour délivrer la position obtenue de la barre de contrôle à titre de signal de position de barre de contrôle,
dans lequel le second contrôleur (23b) est
configuré pour calculer un changement de la position de la barre de contrôle, et
configuré pour calculer la position de la barre de contrôle sur la base de l'information quant à la position de la barre de contrôle réellement injectée depuis le capteur de position de barre de contrôle (6) et du changement calculé de la position de la barre de contrôle.

2. Procédé de test pour un système de commande et d'information (50) pour barre de contrôle selon la revendication 1, le procédé de test comprenant :
une première étape consistant à amener chacun des contrôleurs individuels de barres de contrôle à obtenir des positions des barres de contrôle (3) par calcul en accord avec l'ordre de pilotage de barre de contrôle transmis ;
une seconde étape consistant à obtenir un signal de position de barre de contrôle depuis la position de barre de contrôle obtenue dans la première étape ; et
une troisième étape consistant à déterminer si le système de commande et d'information de barre de contrôle (50) fonctionne normalement en comparant le signal de position de barre de contrôle obtenu dans la seconde étape à une valeur attendue.

3. Procédé de test selon la revendication 2,
dans lequel la première étape inclut l'injection du même signal d'ordre de pilotage de barre de contrôle pour toutes les barres de contrôle (3) ; et
dans lequel la troisième étape inclut l'opération consistant à déterminer si le système de commande et d'information de barre de contrôle (50) fonctionne normalement en vérifiant si une variation entre les signaux de position de barre de contrôle pour chacune des barres de contrôle individuelles (3) tombe dans une plage prédéterminée, les signaux de position de barres de contrôle étant obtenus par les contrôleurs individuels de barres de contrôle (22).

4. Procédé de test selon la revendication 2 ou 3,
dans lequel la troisième étape inclut l'opération consistant à délivrer les signaux de position de barre de contrôle obtenus par les contrôleurs individuels de barre de contrôle (22) de telle façon qu'un résultat d'une comparaison entre le signal de position de barre de contrôle pour chacune des barres de contrôle (3) et la valeur attendue est affiché sur un dispositif d'affichage dans le local de commande principal.

5. Procédé de test selon l'une au moins des revendications 2 à 4,
dans lequel la première étape inclut l'opération consistant à délivrer l'ordre de pilotage de barre de contrôle depuis le local de commande principal ; et dans lequel la troisième étape inclut l'opération consistant à déterminer si le système de commande et d'information de barre de contrôle (50) fonctionne normalement en vérifiant si le signal de position de barre de contrôle délivré depuis chacun des contrôleurs individuels de barre de contrôle (22) coïncide avec la valeur attendue.

6. Procédé de test selon l'une au moins des revendications 2 à 5,
dans lequel la troisième étape inclut l'opération consistant à provoquer intentionnellement une anomalie dans l'un quelconque des dispositifs constituant le système de commande et d'information de barre de contrôle (50) et à déterminer si le système de commande et d'information de barre de contrôle (50) fonctionne normalement en vérifiant si le système de commande et d'information de barre de contrôle (50) réagit de façon appropriée à l'anomalie.

7. Système de commande et d'information (50) pour barre de contrôle selon la revendication 1, comprenant en outre un dispositif d'ordre (61) configuré pour fournir une instruction pour commuter entre le premier contrôleur (23a) et le second contrôleur (23b) dans chacun des contrôleurs individuels de barre de contrôle (22).
